# EUROPÄISCHE PATENTSCHRIFT

(11) **EP 3 328 649 B1**
(45) Veröffentlichungstag und Bekanntmachung des Hinweises auf die Patenterteilung: **19.12.2018**
(21) Anmeldenummer: 17751348.8
(22) Anmeldetag: 03.08.2017
(51) Int. Cl.: B41F 33/00, B41F 33/02, B65H 26/00, B65H 43/08, G01N 21/00

(54) **VERFAHREN ZUM PRÜFEN EINER FUNKTIONSEINHEIT FÜR DEN EINSATZ AN EINER LAUFENDEN MATERIALBAHN**
METHOD FOR TESTING A FUNCTIONAL UNIT FOR USE ON A MOVING MATERIAL WEB
PROCÉDÉ DE VÉRIFICATION D'UNE UNITÉ FONCTIONNELLE DESTINÉE À ÊTRE UTILISÉE CONTRE UNE FEUILLE CONINTUE EN DÉFILEMENT

(30) Priorität: 11.10.2016 DE 102016119292
(43) Veröffentlichungstag der Anmeldung: 06.06.2018
(73) Patentinhaber: BST eltromat International GmbH, 33739 Bielefeld (DE)
(72) Erfinder: BETTFÜHR, Jürgen, 33739 Bielefeld (DE); NACKE, Theodor, 33739 Bielefeld (DE)
(74) Vertreter: Ter Meer Steinmeister & Partner
(86) Internationale Anmeldenummer: PCT/EP2017/069632
(87) Internationale Veröffentlichungsnummer: WO 2018/068916

(56) Entgegenhaltungen:
- EP-A2- 2 186 639
- DE-A1-102008 059 584

## Beschreibung

Die Erfindung betrifft ein Verfahren zum Prüfen einer Funktionseinheit, die ein optisches Sensorsystem zum Erfassen eines optischen Signals von zumindest einem Teil einer laufenden Materialbahn und ein Datenverarbeitungssystem zur Auswertung des optischen Signals aufweist.

Bei der Funktionseinheit kann es sich beispielsweise um eine Bahnlaufregelvorrichtung in einer Rotationsdruckmaschine handeln.

In DE 10 2008 059 584 A1 wird eine Bahnlaufregelvorrichtung beschrieben, die zur Regelung des Registers einer Bedruckstoffbahn in einer Rotationsdruckmaschine dient. Das optische Sensorsystem kann durch eine Kamera gebildet werden, beispielsweise eine Zeilenkamera, die an einer bestimmten Messposition die gesamte Breite der laufenden Materialbahn erfasst. Insbesondere dient das Sensorsystem dazu, die Lage der linken und rechten Kanten der Materialbahn zu erfassen, so dass etwaige Positionsabweichungen der Materialbahn erkannt und erforderlichenfalls durch entsprechende Stellbefehle an ein Aktorsystem korrigiert werden können.

An laufenden Materialbahnen in Rotationsdruckmaschinen werden auch Funktionseinheiten mit einer Kamera eingesetzt, die beispielsweise zur Bahnbeobachtung, zur Bahninspektion und/oder zur automatischen Fehlererkennung dienen. Der Aufzeichnungstakt der Kamera ist dann mit dem Repeat der Druckbilder auf der Bedruckstoffbahn synchronisiert, so dass man nach dem Stroboskop-Prinzip ein stehendes Bild auf einem Bildschirm erhält.

Die Kamerasysteme müssen vor dem Einbau in die Druckmaschine gründlich getestet werden, insbesondere auch in Langzeittests, in denen nicht nur die Aufzeichnungseigenschaften der Kamera und die Funktion der nachgeschalteten Software überprüft wird, sondern auch die Synchronisation der Bildaufzeichnung mit dem Repeat. Dazu ist es bekannt, die Kamera vor der Umfangsfläche eines rotierenden Zylinders zu installieren, auf dem zur Simulation der laufenden Materialbahn ein Substrat angebracht ist, das nur ein einzelnes Druckbild trägt und sich im wesentlichen über den gesamten Umfang des Zylinders erstreckt, so dass die Kamera während der Dauer des Tests bei jeder Zylinderumdrehung wieder dasselbe Bild aufzeichnet.

Aufgabe der Erfindung ist es, ein Verfahren anzugeben, das Funktionsprüfungen an Funktionseinheiten er oben beschriebnen Art erleichtert. Unter "Funktionsprüfungen" im weiteren Sinne sollen dabei auch Demonstrationen verstanden werden, bei denen die Funktionsweise und die Fähigkeiten der Funktionseinheit beispielsweise auf einem Messestand demonstriert werden.

Bei dem erfindungsgemäßen Verfahren wird die gestellte Aufgabe dadurch gelöst, dass im Erfassungsbereich des Sensorsystems ein Display angeordnet wird, auf dem ein Zustand der Materialbahn dargestellt wird.

Mit Hilfe des Displays lassen sich in sehr einfacher und flexibler Weise unterschiedliche Zustände einer Materialbahn simulieren, beispielsweise unterschiedliche Breiten, Positionen und Farben der Materialbahn, ohne dass tatsächlich eine Materialbahn und ein zugehöriges Bahntransportsystem vorhanden sein müssen. Insbesondere kann die Simulation auch außerhalb der Druckmaschine erfolgen, beispielsweise auf einem Messestand. Die Reaktion des Systems auf die simulierten Zustände kann dann beispielsweise durch Auswertung der vom Datenverarbeitungssystem erzeugten Stellbefehle oder durch Auswertung anderer Daten verfolgt werden, die von dem Datenverarbeitungssystem bereitgestellt werden, beispielsweise verarbeitete Bilddaten, die auf dem vom Sensorsystem aufgenommenen optischen Signal basieren.

Vorteilhafte Ausgestaltungen und Weiterbildungen der Erfindung sind in den Unteransprüchen angegeben.

In einer Ausführungsform wird das Verfahren zur Prüfung oder Demonstration von Bahnlaufregelvorrichtungen eingesetzt. Dabei können die Reaktionen der Bahn auf die vom Datenverarbeitungssystem berechneten Stellbefehle für das Aktorsystem simuliert werden.

Bei dem Display kann es sich beispielsweise um einen Computerbildschirm handeln, ggf. auch um den Bildschirm eines Tablet-Computers, oder wahlweise auch um eine Leinwand, auf die mit einem Beamer ein Bild projiziert wird.

Dem Display kann ein Treiber zugeordnet sein, der Daten vom Datenverarbeitungssystem der Bahnlaufregelvorrichtung erhält und das auf dem Display darzustellende Bild in Abhängigkeit von diesen Daten berechnet. So können beispielsweise durch Auswertung der Stellbefehle für das Aktorsystem die daraus resultierenden Positionsverlagerungen der Materialbahn simuliert werden.

In einer zweckmäßigen Ausführungsform wird auf dem Display auch ein Bild eingeblendet, das auf dem vom optischen Sensorsystem erfassten optischen Signal basiert. Beispielsweise kann es sich bei diesem Bild unmittelbar um das vom optischen Sensorsystem, also beispielsweise von einer Zeilenkamera, aufgenommene Bild handeln.

Im Datenverarbeitungssystem der Bahnlaufregelvorrichtung wird das vom optischen Sensorsystem aufgenommene Bild zumeist einer Bildverarbeitung unterzogen, durch die insbesondere die Positionen der Kanten der Materialbahn identifiziert werden. In einer besonders vorteilhaften Ausfuhrungsform wird auf dem Display ein Bild eingeblendet, das die als Ergebnis dieser Bildverarbeitung erhaltenen Positionen der Materialbahnkanten angibt, ggf. zusammen mit einer Helligkeitskurve, die das unverarbeitete, von der Zeilenkamera gesehene Bild repräsentiert. Auf diese Weise lässt sich demonstrieren, wie gut das System die Lage der Bahnkanten erfasst und wie schnell es auf etwaige Positionsveränderungen der Materialbahn reagiert.

Wenn die als optisches Sensorsystem dienende Kamera, beispielsweise eine Zeilenkamera oder eine Matrixkamera, eine Farbkamera ist, lässt sich ein zur Detektion der Kanten der Materialbahn dienendes Helligkeitssignal dadurch modifizieren, dass die verschiedenen Farbkanäle unterschiedlich gewichtet werden, so dass man einen möglichst guten Kontrast an den Bahnkanten erhält. Mit Hilfe des Displays lassen sich unterschiedliche Farb- und Transparenzeigenschaften der Materialbahn simulieren, und die Auswertung des optischen Signals lässt sich dann für den jeweiligen Zustand optimieren, wobei das erhaltene Ergebnis unmittelbar auf dem Display sichtbar gemacht wird.

In einer vorteilhaften Ausführungsform wird das Display zumindest zeitweise in die Maschine eingebaut, in der die Bahnlaufregelvorrichtung benutzt wird. Vorzugsweise erfolgen der Einbau des Displays und/oder die Bildwiedergabe auf dem Display in der Weise, dass das wiedergegebene Bild sich in einer präzise definierten Position in Bezug auf das Bahntransportsystem der Maschine befindet. Das erlaubt es, das Display und die darauf simulierten Zustände einer Materialbahn auch zum Justieren und/oder Kalibrieren des optischen Sensorsystems zu nutzen. Beispielsweise kann im Fall eines durch eine Zeilenkamera gebildeten Sensorsystems eine etwaige Schräglage der Zeilenkamera in Bezug auf die Laufrichtung der Materialbahn erfasst und ggf. korrigiert werden.

Ebenso können auf dem Display Kalibriervorlagen dargestellt werden, die eine wirklichkeitsgetreue Skalierung des vom optischen Sensorsystem aufgenommenen Bildes sowie ggf. auch die Korrektur von Abbildungsfehlern ermöglichen.

Bei transparenten oder mehr oder weniger durchscheinenden Materialbahnen kann das Display bei Messungen im Durchlichtverfahren auch als Beleuchtungssystem oder Teil des Beleuchtungssystems für das optische Sensorsystem genutzt werden. Dabei lässt sich durch geeignete Wahl der Farben auf dem Display der Kontrast optimieren. Ebenso kann mit Hilfe des Displays ein standardisierter Hintergrund für die Materialbahn geschaffen werden.

Wenn das Verfahren zur Prüfung oder Demonstration von Funktionseinheiten eingesetzt wird, bei denen eine Kamera auf einen rotierenden Zylinder gerichtet ist, so kann ein Display aus einem biegsamen, folienartigen Material verwendet werden, das auf den Umfang des Zylinders aufgespannt wird. Das erlaubt es, alle mögliche Arten von Fehlern zu simulieren, indem das auf dem Display wiedergegebene Bild von einer Zylinderumdrehung zur anderen modifiziert wird. Bei gleichzeitiger Messung des Drehwinkels des Zylinders kann auch die Synchronisation des Kamerasystems mit der Drehung des Zylinders (dem Repeat) geprüft werden.

Im folgenden werden Ausführungsbeispiele anhand der Zeichnung näher erläutert.

Es zeigen:
- Fig. 1: eine Prinzipskizze einer Rotationsdruckmaschine mit einer Bahnlaufregelvorrichtung, mit der das erfindungsgemäße Verfahren ausführbar ist;
- Fig. 2: eine Skizze zur Illustration der Verwendung des erfindungsgemäßen Verfahrens zu Demonstrationszwecken auf einem Messestand;
- Fig. 3 und 4: ein Display und verschiedene auf dem Display dargestellte Bilder während der Ausführung des erfindungsgemäßen Verfahrens;
- Fig. 5 bis 7: Displaybilder zur Illustration eines Verfahrens zur Bestimmung des Erfassungsbereichs einer Zeilenkamera;
- Fig. 8 und 9: Beispiele für mögliche Verzerrungen des Erfassungsbereichs einer Zeilenkamera, die mit dem erfindungsgemäßen Verfahren detektierbar sind;
- Fig. 10 und 11: Beispiele für Displaybilder bei einem Verfahren zur Kalibrierung der Zeilenkamera;
- Fig. 12 und 13: Beispiele für Displaybilder zur Korrektur von Abbildungsfehlern einer Matrixkamera; und
- Fig. 14: eine Skizze zur Illustration eines Verfahrens zum Testen eines Bahnbeobachtungssystems.

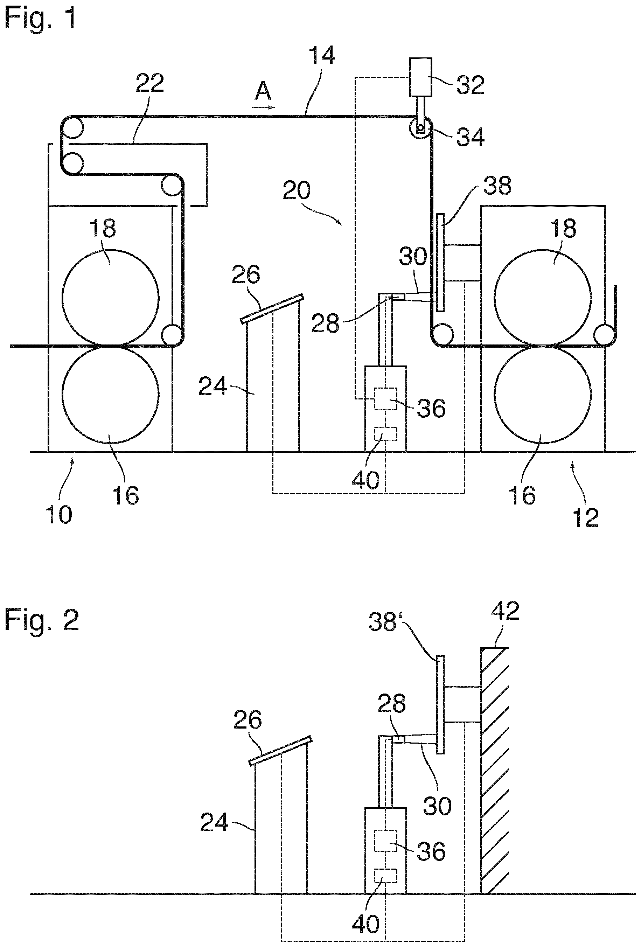

In Fig. 1 sind schematisch zwei Druckwerke 10, 12 einer Rotationsdruckmaschine gezeigt, die von einer Materialbahn 14 (Bedruckstoffbahn) in Richtung eines Pfeils A durchlaufen werden. Jedes der Druckwerke 10, 12 weist einen Druckzylinder 16 und einen Gegendruckzylinder 18 auf, zwischen denen die Materialbahn 14 hindurchläuft. Mit den Druckzylindern 16 werden zwei Farbauszugsbilder in verschiedenen Farben deckungsgleich auf die Materialbahn 14 aufgedruckt. Hinter dem Druckwerk 10 durchläuft die Materialbahn 14 eine Trocknungsanlage 22 und eine Bahnlaufregelvorrichtung 20. Zwischen den beiden Druckwerken 10, 12 ist ein Leitstand 24 mit einem Monitor 26 installiert, an dem Funktionen der Rotationsdruckmaschine überwacht werden können.

Die Bahnlaufregelvorrichtung 20 weist ein optisches Sensorsystem 28 in der Form einer Zeilenkamera auf, die die Materialbahn 14 und das darauf im Druckwerk 10 aufgedruckte Bild in einem Erfassungsbereich 30 erfasst, der sich über die gesamte Breite der Materialbahn 14 erstreckt und an beiden Rändern noch etwas über die Materialbahn hinausreicht. Weiterhin gehört zu der Bahnlaufregelvorrichtung ein Aktorsystem 32, das auf eine die Materialbahn umlenkende Steuerwalze 34 wirkt und durch Einstellung der Neigung der Steuerwalze 34 die Laufrichtung der Materialbahn und damit auch die Position der Materialbahn im Erfassungsbereich 30 bestimmt. Weiterhin gehört zu der Bahnlaufregelvorrichtung 20 ein Datenverarbeitungssystem 36, das das vom Sensorsystem 28 erhaltene optische Signal auswertet und daraus Stellbefehle für das Aktorsystem 32 errechnet, so dass die laterale Position der Materialbahn 14 (in der Richtung senkrecht zur Zeichenebene in Fig. 1) auf eine bestimmte Sollposition geregelt wird, die sicherstellt, dass die in den beiden Druckwerken 10, 12 zu druckenden Farbauszugsbilder lagerichtig übereinander gedruckt werden.

Hinter dem Abschnitt der Materialbahn 14, die durch den Erfassungsbereich 30 des optischen Sensorsystems 28 läuft, ist ein Display 38 angeordnet, das beispielsweise durch einen Computerbildschirm gebildet wird. Ein Teil des Displays 38 liegt im Erfassungsbereich 30 des Sensorsystems 28. Die Breite des Displays 38 in der Richtung quer zur Transportrichtung der Materialbahn 14 ist mindestens gleich der Breite des Erfassungsbereichs 30.

Die auf dem Display 38 dargestellte Bildinformation wird in einem Treiber 40 generiert, der mit dem Datenverarbeitungssystem 36 verbunden ist. Die vom Treiber 40 generierte Bildinformation kann zusätzlich auch auf dem Monitor 26 des Leitstands 24 wiedergegeben werden.

Wenn in der Druckmaschine keine Materialbahn 14 eingezogen ist, so "sieht" das optische Sensorsystem 28 einen Teil des auf dem Display 38 wiedergegebenen Bildes. Bei diesem Bild kann es sich beispielsweise um eine Simulation einer laufenden Materialbahn handeln. Dieses Bild wird dann von dem Bahnlaufregelsystem 20 in der gleichen Weise ausgewertet wie das Bild der echten Materialbahn 14, so dass sich der Betrieb der Bahnlaufregelvorrichtung unter in einem weiten Bereich wählbaren Bedingungen simulieren lässt.

Fig. 2 zeigt Teile der Bahnlaufregelvorrichtung, nämlich das optische Sensorsystem 28 und das Datenverarbeitungssystem 36, die hier zu Demonstrationszwecken vor einem Display 38' an einer Wand 42 eines Messestandes aufgebaut sind. Die räumliche Beziehung zwischen dem optischen Sensorsystem 28 und dem Display 38' in Fig. 2 ist die gleiche wie die Beziehung zwischen dem Sensorsystem und dem Display 38 in Fig. 1. Um die Funktionsweise der Bahnlaufregelvorrichtung zu demonstrieren, wird die laufende Materialbahn auf dem Display 38' simuliert. Das erspart die aufwändige Installation eines Bahntransportsystems für eine echte Materialbahn auf dem Messestand.

Wahlweise kann auf dem Messestand auch der Leitstand 24 aufgebaut sein.

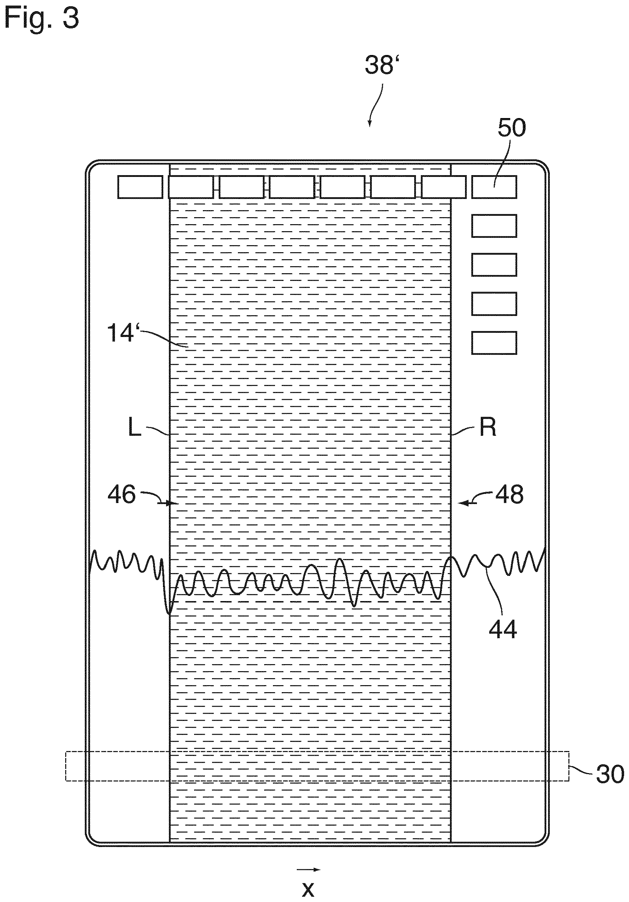

In Fig. 3 ist das Display 38' so gezeigt, wie es vom Sensorsystem 28 und vom Leitstand 24 in Fig. 2 aus gesehen wird. Der Bildinhalt auf dem Display 38' zeigt eine von oben nach unten durchlaufende Materialbahn 14', die den Lauf der echten Materialbahn 14 in Fig. 1 simuliert. Der Erfassungsbereich 30 des optischen Sensorsystems 28 ist gestrichelt eingezeichnet. Außerhalb des Erfassungsbereiches 30 ist auf dem Display eine Kurve 44 eingeblendet, die das vom optischen Sensorsystem 28 empfangene optische Signal repräsentiert. Da die Sensoreinrichtung im gezeigten Beispiel eine Zeilenkamera ist, lässt sich dieses Signal als Helligkeitskurve darstellen, die in Echtzeit die Helligkeit der von der Zeilenkamera aufgenommenen Bildpunkte als Funktion des Ortes dieser Bildpunkte in der Richtung x quer zur Laufrichtung der Materialbahn 14' angibt. Im gezeigten Beispiel zeigt der Verlauf der Kurve 44, dass die Helligkeit innerhalb der Materialbahn 14' etwas kleiner ist als die Helligkeit des Hintergrunds. Allerdings ist das Signal/Rausch-Verhältnis hier so gering, dass die linken und rechten Kanten L, R der Materialbahn 14 anhand der Kurve 44 kaum auszumachen sind.

Zwei auf dem Display 38' eingeblendete Pfeile 46, 48 markieren die Sollpositionen der Kanten L und R. Man erkennt, dass in der hier gezeigten Simulation die Lage der Materialbahn 14' etwas nach links von der Sollposition abweicht.

Weiterhin sind auf dem Display 38' mehrere Schaltflächen 50 dargestellt, die beispielsweise mit Hilfe eines vom Leitstand 24 aus gesteuerten Cursors angewählt und aktiviert werden können, um Funktionen und Parameter der Bahnlaufregelvorrichtung und ggf. auch der zugehörigen Simulationssoftware zu steuern bzw. einzustellen.

Im gezeigten Beispiel ist das Display 38' ein Farbdisplay, mit dem eine bestimmte Farbe der Materialbahn 14' simuliert werden kann. Auch die Zeilenkamera, die das Sensorsystem 28 bildet, ist eine Farbkamera. Mit Hilfe der Schaltflächen 50 lässt sich nun unter anderem die Gewichtung der Farbkanäle in dem von der Zeilenkamera aufgenommenen Signal so einstellen, dass für die gegebene Farbe der Materialbahn 14' der Kontrast zwischen dieser Materialbahn und dem Hintergrund optimiert wird.

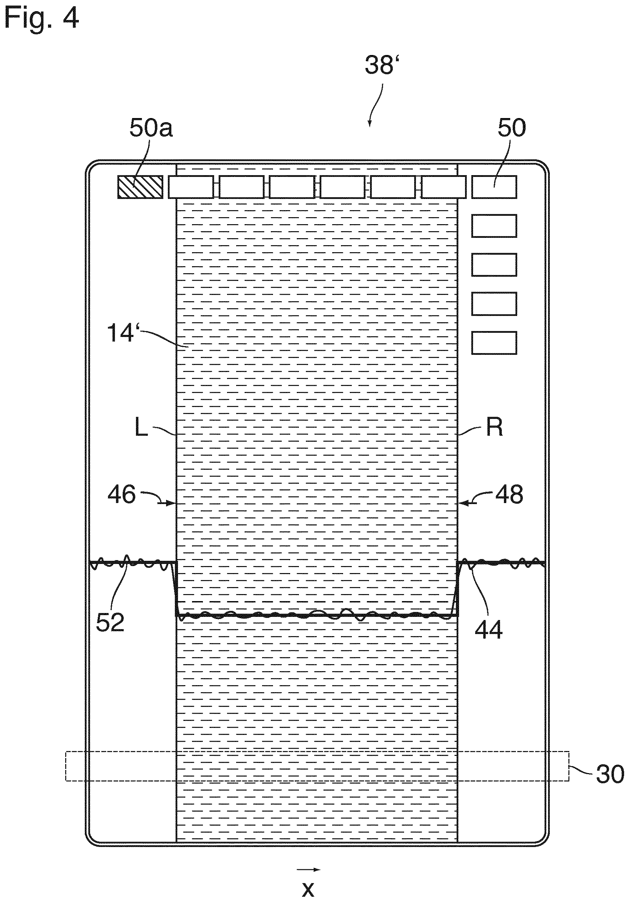

Das Ergebnis ist in Fig. 4 dargestellt. Die Kurve 44 zeigt nun einen wesentlich größeren, deutlich über dem Rauschpegel liegenden Helligkeitsabstand zwischen der Materialbahn 14' und dem Hintergrund. Dies erlaubt es einem im Datenverarbeitungssystem 36 implementierten Kantendetektionsalgorithmus die Kanten L und R der Materialbahn 14' automatisch zu erkennen. Der Umstand, dass der Kantendetektionsalgorithmus die Lage der Kanten L, R erkannt hat, wird in Fig. 4 durch einen Farbumschlag einer entsprechenden Schaltfläche 50a auf dem Display angezeigt.

In Fig. 4 ist auf dem Display 38' zusätzlich zu der Kurve 44' eine Rechteckkurve 52 eingeblendet, die das Ergebnis der digitalen Bildverarbeitung durch den Kantendetektionsalgorithmus zeigt. Beispielsweise entsteht die Rechteckkurve 52 durch Schwellenwertvergleich des durch die Kurve 44 repräsentierten Signals mit einem geeignet gewählten Schwellenwert. Die fallenden und steigenden Flanken der Rechteckkurve 52 geben dann mit hoher Präzision die Lage der linken und rechten Kanten L, R der Materialbahn 14' an. Das ermöglicht es dem im Datenverarbeitungssystem 36 implementierten Bahnlaufregelalgorithmus die Positionsabweichung der Materialbahn 14' gegenüber der Sollposition (Pfeile 46, 48) zu erkennen und zu korrigieren. Im gezeigten Beispiel wurde auch der Effekt der vom Regelalgorithmus erzeugten Stellbefehle auf die Lage der Materialbahn 14' simuliert. Fig. 4 zeigt deshalb die Materialbahn 14' genau an der durch die Pfeile 46, 48 markierten Sollposition.

Zu Demonstrationszwecken kann man nun künstlich Positionsabweichungen der Materialbahn 14' erzeugen und dann auf dem Display 38' verfolgen, wie der Regelalgorithmus diese Positionsabweichungen korrigiert.

Ebenso kann man andere Farben oder Transparenzeigenschaften der Materialbahn 14' simulieren und dann beobachten, wie sich dadurch der Kontrast der Kurve 44 verändert. Die Empfindlichkeitseinstellungen der Zeilenkamera können dann im Hinblick auf die geänderte Farbe der Materialbahn erneut optimiert werden. Die für unterschiedliche Materialbahnen optimierten Einstellungen können gespeichert und dann auch beim realen Betrieb der Bahnlaufregelvorrichtung 20 (Fig. 1) benutzt werden.

Auf dem Display 38' können auch Materialbahnen simuliert die gedruckte Bilder sowie ggf. Registermarken oder dergleichen tragen. Die Ränder dieser Bilder und/oder die Registermarken können zusätzliche, in Bahnlaufrichtung verlaufende Kanten bilden, die vom Kantendetektionsalgorithmus erkannt werden können. Mit Hilfe der Schaltflächen 50 kann dann angegeben werden, auf welche dieser Kanten geregelt werden soll, beispielsweise können die erkannten Kannten anhand von laufenden Nummern identifiziert werden, die die Kanten von links nach rechts oder von außen nach innen zählen.

Solange in der Druckmaschine noch keine Materialbahn 14 eingezogen ist, können die oben beschriebenen Funktionsprüfungen und Demonstrationen auch mit der in die Druckmaschine integrierten Bahnlaufregelvorrichtung 20 und dem Display 38 in Fig. 1 vorgenommen werden.

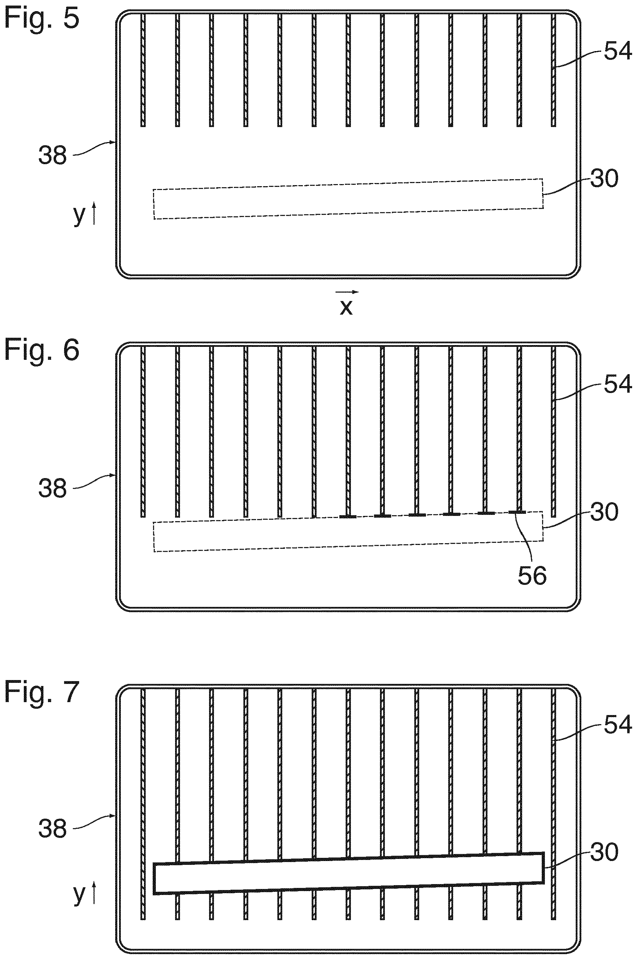

Mit Hilfe des Displays 38' oder 38 ist es auch möglich, die genaue Lage des Erfassungsbereiches 30 des Sensorsystems 28 zu überprüfen. In Fig. 5 bis 7 wird dies am Beispiel des Displays 38 in der Druckmaschine illustriert. Dabei soll angenommen werden, dass die Zeilenkamera und dementsprechend auch der Erfassungsbereich 30 leicht dejustiert und gegenüber der quer zur Laufrichtung der Bahn verlaufenden Achse x geneigt ist, wie in Fig. 5 dargestellt ist.

Der Lauf der Materialbahn wird hier simuliert durch auf der Breite des Displays 38 verteilte Messstreifen 54 oder sonstige Marken, die in Laufrichtung der Bahn, von oben nach unten in Fig. 5, in das Bild einlaufen. In Fig. 5 haben die Messstreifen 54 den Erfassungsbereich 30 noch nicht erreicht, so dass sie noch nicht von der Zeilenkamera erfasst werden.

In Fig. 6 haben einige der Messstreifen 54 den Erfassungsbereich 30 erreicht, so dass ihre vorauslaufenden Enden von der Zeilenkamera erfasst werden. Aufgrund der Neigung des Erfassungsbereiches gilt dies jedoch nur für die Messstreifen auf der rechten Seite des Bildes, während die Messstreifen auf der linken Seite den Erfassungsbereich noch nicht ganz erreicht haben. Der Zeitpunkt, an dem das Sensorsystem erstmals das vorauslaufende Ende des Messstreifens 54 detektiert, wird für jeden Messstreifen gespeichert, und die zu diesem Zeitpunkt von dem Messstreifen 54 erreichte Position wird durch eine Positionsmarke 56 auf dem Display angegeben. Wenn weitere Messstreifen 54 den Erfassungsbereich erreichen, werden neue Positionsmarken 56 eingeblendet, die zusammen den Verlauf des oberen Randes des Erfassungsbereiches 30 angeben.

In Fig. 7 haben die Messstreifen 54 nahezu den unteren Rand des Displays erreicht, und anhand der Lage der Positionsmarken 56 wurde der Umriss des Erfassungsbereiches 30 rekonstruiert und in das Bild eingeblendet.

Im gezeigten Beispiel ist die Breite des Erfassungsbereiches 30 kleiner als die Breite des Displays 38, so dass einige der Messstreifen 54 seitlich am Erfassungsbereich 30 vorbeilaufen, ohne diesen zu treffen. Da diese Messstreifen keine Positionsmarken 56 erzeugen, lässt sich anhand der Positionsmarken 56 auch die Breite des Messbereiches 30 bestimmen, mit einer räumlichen Auflösung, die dem Abstand zwischen den Messstreifen 54 entspricht.

Indem auch die Zeitpunkte registriert werden, an denen die vorauslaufenden Enden der Messstreifen 54 den Erfassungsbereich 30 wieder verlassen (in Fig. 7), lässt sich auch der Verlauf des unteren Randes des Erfassungsbereiches 30 bestimmen, so dass sich auch die Höhe des Erfassungsbereiches in der Richtung y parallel zur Laufrichtung der Materialbahn messen lässt.

Wenn das Display 38 und das Sensorsystem 28 in der Druckmaschine eingebaut sind, lässt sich die auf diese Weise gemessene Lage des Erfassungsbereiches 30 dazu nutzen, das Sensorsystem neu zu justieren und so die Schrägstellung der Zeilenkamera zu beseitigen. Dazu kann es zweckmäßig sein, das auf dem Display 38 wiedergegebene Bild so zu skalieren, dass es in der Richtung y einen größeren Maßstab aufweist, so dass die Schrägstellung des Erfassungsbereiches 30 übertrieben dargestellt wird.

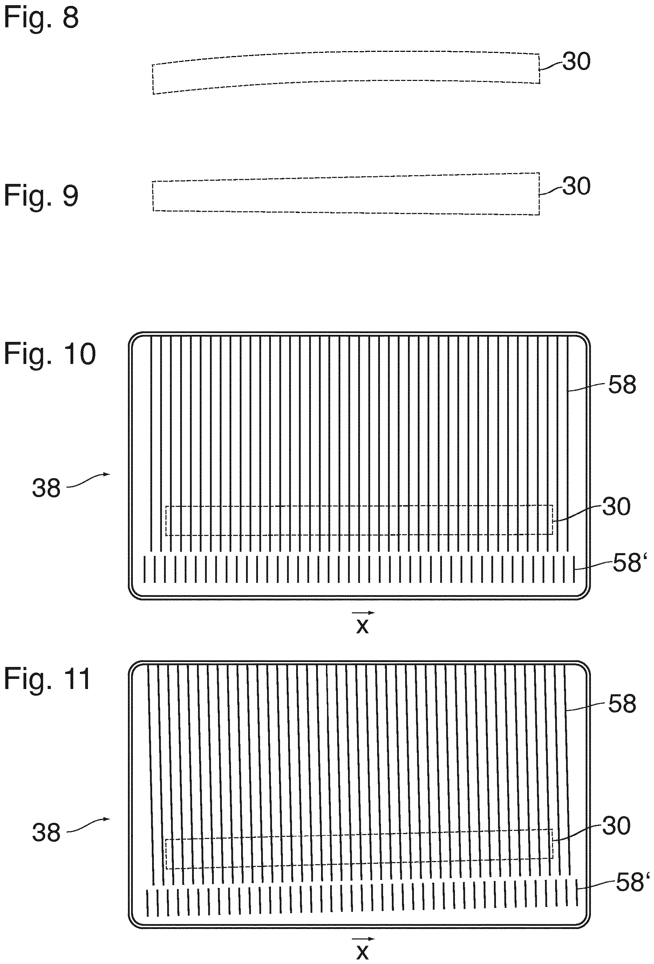

Nach dem oben beschriebenen Verfahren lässt sich (bei einer sehr langen Zeilenkamera) auch eine etwaige Krümmung der Zeilenkamera und eine entsprechende Krümmung des Erfassungsbereiches 30 feststellen, wie als Beispiel in Fig. 8 dargestellt ist.

Fig. 9 zeigt dagegen ein Beispiel, bei dem der Erfassungsbereich 30 trapezförmig ist und auf der rechten Seite eine größere Höhe aufweist als auf der linken Seite. Eine solche Verzerrung des Erfassungsbereiches kann beispielsweise dadurch zustande kommen, dass die Zeilenkamera nicht exakt in einer zum Display 38 und zu der Materialbahn 14 parallelen Ebene angeordnet ist, so dass der Abstand zum Display auf der rechten Seite größer ist als auf der linken. Auch Fehljustierungen dieser Art lassen sich mit dem beschriebenen Verfahren erkennen und erforderlichenfalls korrigieren.

Fig. 10 und 11 illustrieren Beispiele, bei denen Messstreifen 58 ähnlich den Messstreifen 54 in Fig. 5 bis 7 dazu benutzt werden, den Abbildungsmaßstab der Zeilenkamera in der Richtung x (Zeilenrichtung) zu bestimmen und zu kalibrieren. Die Messstreifen 58 bilden in diesem Fall ein verhältnismäßig enges gleichmäßiges Raster und werden so auf dem Display 38 dargestellt, dass sie in im wesentlichen vertikaler Richtung durch den Erfassungsbereich 30 laufen. Die Bildwiedergabe auf dem Display 38 wird dabei so gesteuert, dass die einzelnen Messstreifen 58 einheitliche, genau bekannte Abstände zueinander aufweisen, beispielsweise Abstände von 1 mm.

Im unteren Teil des Bildes, unterhalb des Erfassungsbereiches 30, ist in Fig. 10 ein Bild eingeblendet, das mit der Zeilenkamera aufgenommen wurde und aus den Bildern 58' der Messstreifen 58 besteht. Aufgrund eines Skalierungsfehlers ist der Abstand zwischen den Bildern 58' jedoch etwas größer als der tatsächliche Abstand zwischen den Messstreifen 58. Um das optische Sensorsystem 28 (Zeilenkamera) zu kalibrieren, wird nun die Skalierung des von der Zeilenkamera aufgenommenen Bildes so verstellt, dass die Abstände zwischen den Bildern 58' mit den Abständen zwischen den Messstreifen 58 in Übereinstimmung gebracht werden. Mit der so kalibrierten Zeilenkamera sind dann absolute Abstandsmessungen in der Richtung x auf dem Display und entsprechend auch auf der realen Materialbahn 14 möglich.

Fig. 11 zeigt die gleiche Kalibrierungsprozedur, jedoch für den Fall, dass die Zeilenkamera und dementsprechend auch der Erfassungsbereich 30 eine Schräglage ähnlich wie in Fig. 5 bis 7 aufweisen. In diesem Fall wird zunächst mit Hilfe der Messstreifen 54 oder auch mit Hilfe der vertikalen Messstreifen 58 in Fig. 10 die Schräglage des Erfassungsbereiches 30 bestimmt, und anschließend wird auf dem Display 38 das Bild so gedreht, dass die Messstreifen 58 und auch deren Bilder 58' rechtwinklig zu dem Erfassungsbereich 30 verlaufen, wie in Fig. 11 gezeigt ist. Auf diese Weise lassen sich bei der Kalibrierung auch Skalierungsfehler beseitigen, die sich aus der Schräglage der Zeilenkamera und des Erfassungsbereich ergeben.

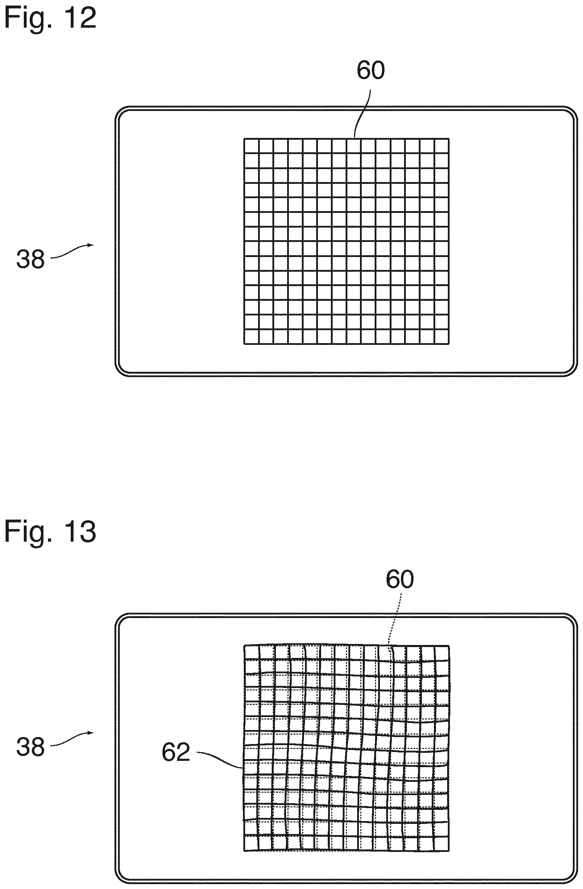

Wenn das optische Sensorsystem 28 nicht durch eine Zeilenkamera, sondern durch eine Matrixkamera gebildet wird, lassen sich durch ein analoges Verfahren auch Skalierungsfehler sowie Drehungen und trapezförmige Verzeichnungen des zweidimensionalen Bildes der Matrixkamera feststellen und korrigieren. Zu diesem Zweck wird auf dem Display 38 (oder 38') ein zweidimensionales Referenzraster 60 wiedergegeben, wie es in Fig. 12 gezeigt ist. In diesem Fall wird das Referenzraster 60 vorzugsweise als ruhendes Bild wiedergegeben. Das auf dem Display 38 wiedergegebene Bild wird dann mit der Matrixkamera aufgenommen, und das so erhaltene Bild 62 wird, wie in Fig. 13 gezeigt ist, so in das Display 38 eingeblendet, dass es mit dem Referenzraster 60 überlagert wird. Die durch Fehljustierungen oder Abbildungsfehler verursachten Abweichungen lassen sich dann unmittelbar erkennen und ggf. korrigieren. In dem in Fig. 13 gezeigten Beispiel rufen Abbildungsfehler eine nichtlineare Verzeichnung des Bildes 62 hervor. Anhand des Referenzrasters 60 lassen sich durch einen geeigneten Algorithmus auch solche nichtlinearen Abbildungsfehler korrigieren.

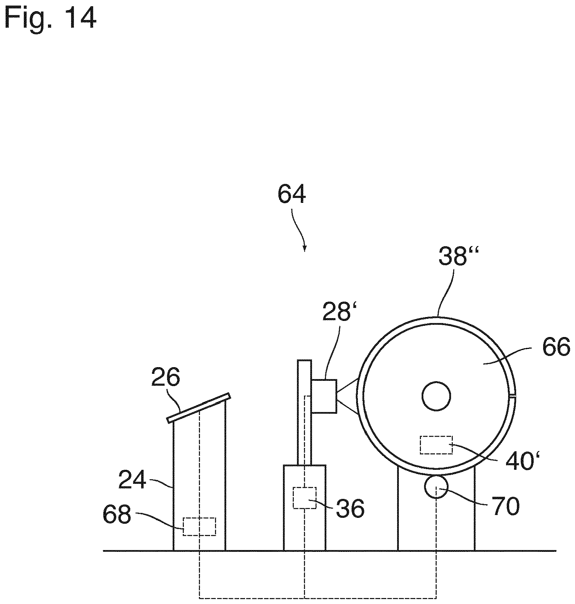

Fig. 14 illustriert ein Verfahren, bei dem ein Langzeittest an einem Bahnbeobachtungssystem ausgeführt wird.

Das Bahnbeobachtungssystem wird durch eine Funktionseinheit 64 gebildet, die zu Testzwecken in einem Prüfstand installiert ist und als optisches Sensorsystem 28' eine Matrixkamera aufweist, die auf die Umfangsfläche eines rotierenden Zylinders 66 gerichtet ist. Der Zylinder 66 simuliert einen Zylinder der Druckmaschine, über den die bedruckte Materialbahn läuft, so dass sie mit der Matrixkamera beobachtet werden kann. Zu der Funktionseinheit 64 gehören weiterhin das Datenverarbeitungssystem 36 und wahlweise der Leitstand 24 mit dem Monitor 26.

Auf dem Umfang des Zylinders 66 ist ein Display 38" aus einem biegsamen, folienartigen Material aufgespannt, der den Zylinder nahezu vollständig umschließt. Ein Treiber 40' zur Ansteuerung des Displays 38" ist in diesem Beispiel in dem rotierenden Zylinder 66 installiert, kann jedoch auch drahtlos oder über eine Drehdurchführung mit einem Steuergerät 68 im Leitstand 24 kommunizieren.

Am Umfang des Zylinders 66 ist weiterhin eine Reibrolle 70 angeordnet, die den Drehwinkel des Zylinders 66 misst und an das Datenverarbeitungssystem 36 meldet. Zusätzlich kann der Antrieb für den Zylinder 66 ein Null-Signal ausgeben, das jeweils nach einer vollen Umdrehung des Zylinders bei einer bestimmten Winkelstellung erzeugt wird. Das System zur Erfassung der Drehbewegung des Zylinders 66 ist Teil der Funktionseinheit 64 und ist im Prüfstand in derselben Weise eingebaut und angeordnet wie im praktischen Einsatz in der Druckmaschine.

Auf dem Display 38" wird ein Bild wiedergegeben, das dem Druckbild auf der Bedruckstoffbahn entspricht und von dem je nach Zoom-Einstellung ein mehr oder weniger großer Ausschnitt mit Hilfe der Matrixkamera aufgenommen werden kann. Die synchron mit der Umdrehung des Zylinders 66 aufgezeichneten Bilder werden auf dem Monitor 26 dargestellt und zudem elektronisch ausgewertet und beispielsweise im Rahmen eines Fehlererkennungssystems mit einem vorgegebenen Sollbild verglichen, so dass etwaige Soll/Ist-Abweichungen elektronisch erfasst werden können.

Die dynamische Ansteuerung des Displays 38" über den Treiber 40' und das Steuergerät 68 erlaubt es nun, den Bildinhalt im Laufe des Tests zu variieren, so dass beispielsweise sporadische Fehler im Druckbild simuliert werden können und dann überprüft werden kann, ob das Fehlererkennungssystem diese Fehler richtig erkennt.

Auf diese Weise lässt sich die Funktionseinheit 64 unter sehr realistischen Einsatzbedingungen testen.

## Patentansprüche

1. Verfahren zum Prüfen einer Funktionseinheit, die ein optisches Sensorsystem (28) zum Erfassen eines optischen Signals von zumindest einem Teil einer laufenden Materialbahn (14), und ein Datenverarbeitungssystem (36) zur Auswertung des optischen Signals aufweist, **dadurch gekennzeichnet, dass** im Erfassungsbereich (30) des Sensorsystems (28) ein Display (38; 38'; 38") angeordnet wird, auf dem ein Zustand der Materialbahn (14) dargestellt wird.

2. Verfahren nach Anspruch 1, zum Prüfen einer Funktion einer Bahnlaufregelvorrichtung (20), die ein Aktorsystem (32) zum mechanischen Einwirken auf die Materialbahn (14) und ein Datenverarbeitungssystem (36) zur Auswertung des optischen Signals und zum Generieren von Stellbefehlen für das Aktorsystem (32) aufweist.

3. Verfahren nach Anspruch 2, bei dem auf dem Display (38; 38') linke und rechte Kanten (L, R) einer die echte Materialbahn (14) simulierenden Materialbahn (14') dargestellt werden.

4. Verfahren nach Anspruch 3, bei dem auf dem Display (38; 38') eine laufende Materialbahn (14') simuliert wird, deren Position in der Richtung (x) quer zur Laufrichtung entsprechend den vom Datenverarbeitungssystem (36) generierten Stellbefehlen verändert wird.

5. Verfahren nach einem der vorstehenden Ansprüche, bei dem das optische Sensorsystem (28) eine Kamera aufweist und Bildinformation, die auf dem von der Kamera aufgenommenen Bild basiert, in das Bild auf dem Display (38; 38') eingeblendet wird.

6. Verfahren nach einem der vorstehenden Ansprüche, bei dem auf dem Display (38; 38') unterschiedliche Farb- und Transparenzeigenschaften der Materialbahn (14') simuliert werden.

7. Verfahren nach einem der vorstehenden Ansprüche, bei dem sich der Erfassungsbereich (30) des optischen Sensorsystems (28) nur über einen Teil der Fläche des Displays (38; 38') erstreckt und die Bewegung der Materialbahn durch Messmarkierungen (54, 58) simuliert wird, die über das auf dem Display dargestellte Bild laufen, und bei dem für jede Messmarkierung (54, 58) der Zeitpunkt registriert wird, an dem diese Messmarkierung vom Sensorsystem (28) erfasst wird, um so die Lage des Erfassungsbereichs (30) auf dem Display (38; 38') zu bestimmen.

8. Verfahren nach Anspruch 7, bei dem das Display (38) zumindest zeitweise in einer definierten Position in Bezug auf die Bahnlaufregelvorrichtung (20) in eine Maschine eingebaut wird, in welche die Bahnlaufregelvorrichtung (20) integriert ist, und bei dem die anhand der Messmarkierungen (54, 58) bestimmte Lage des Erfassungsbereiches (30) zur Justierung des Sensorsystems (28) benutzt wird.

9. Verfahren nach einem der vorstehenden Ansprüche, bei dem auf dem Display (38) Markierungen (58; 60) dargestellt werden, die ein regelmäßiges Raster aufweisen, und bei dem das optische Sensorsystem (28) eine Kamera aufweist und diese Kamera anhand der Markierungen (58; 60) kalibriert wird.

10. Verfahren nach einem der vorstehenden Ansprüche, bei dem das Display (38) zumindest zeitweise in eine Maschine eingebaut wird, in welche die Bahnlaufregelvorrichtung (20) integriert ist, und bei dem eine von dem optischen Sensorsystem (28) abgewandte Rückseite der Materialbahn (14) mit dem Licht des Displays (38) beleuchtet wird.

11. Verfahren nach Anspruch 1, bei dem das optische Sensorsystem (28') eine Kamera aufweist, die auf einen Umfangsbereich eines rotierenden Zylinders (66) gerichtet ist, der einem Zylinder repräsentiert, über den in einem Produktionsmodus die Materialbahn läuft, und bei dem das Display (38") ein biegsames Display ist, das in einem Prüfmodus auf der Umfangsfläche des Zylinders (66) angeordnet wird.

12. Verfahren nach Anspruch 11, bei dem die Drehung des Zylinders (66) gemessen wird und eine Beziehung zwischen der gemessenen Drehung des Zylinders und der mit der Kamera aufgenommenen Bildinformation geprüft wird.

13. Verfahren nach Anspruch 11 oder 12, bei dem auf dem Display (38") eine Abfolge von auf die Materialbahn geruckten, sich von einander unterscheidenden Bildern simuliert wird.

14. Bahnlaufregelvorrichtung für den Einbau in eine Maschine, die ein Bahntransportsystem für eine laufende Materialbahn (14) aufweist, wobei die Bahnlaufregelvorrichtung (20) ein optisches Sensorsystem (28) zum Erfassen eines optischen Signals von zumindest einem Teil der laufenden Materialbahn (14), ein Aktorsystem (32) zum mechanischen Einwirken auf die Materialbahn (14) und ein Datenverarbeitungssystem (36) zur Auswertung des optischen Signals und zum Generieren von Stellbefehlen für das Aktorsystem (32) aufweist, **dadurch gekennzeichnet, dass** das Bahnlaufregelsystem außerdem ein Display (38) aufweist, das für den Einbau in die Maschine in einer Position im Erfassungsbereich (30) des optischen Sensorsystems (28) ausgebildet ist.

## Claims

1. A method of testing a functional unit that comprises an optical sensor system (28) for capturing an optical signal from at least a part of running material web (14), and a data processing system (36) for processing the optical signal, **characterized in that** a display (38; 38'; 38") is arranged in the detection range (30) of the sensor system (28), and a condition of the material web (14) is shown on the display.

2. The method according to claim 1, for testing a function of a web guiding and control device (20) comprising an actuator system (32) for effecting a mechanical action on the material web (14), and a data processing system (36) for processing the optical signal and for generating adjustment commands for the actuator system (32).

3. The method according to claim 2, wherein left and right edges (L, R) of a material web (14') that simulates the true material web (14) are shown on the display (38; 38').

4. The method according to claim 3, wherein, on the display (38; 38'), a running material web (14') is simulated, and the position of the web in the direction (x) transverse to the running direction is varied in accordance with adjusting commands generated by the data processing system (36).

5. The method according to any of the proceeding claims, wherein the optical sensor system (28) comprises a camera and image information that is based on the image captured by the camera is overlaid on the image on the display (38; 38').

6. The method according to any of the proceeding claims, wherein different colour and transparency properties of the material web (14') are simulated on the display (38; 38').

7. The method according to any of the proceeding claims, wherein the detection range (30) of the optical sensor system (28) extends only over a part of the area of the display (38; 38'), and the movement of the material web is simulated by measuring marks (54, 58) which run over the image shown on the display, and wherein, for each measuring mark (54, 58), the timing is registered when this measuring mark is detected by the sensor system (28), thereby to determine the position of the detection range (30) on the display (38; 38').

8. The method according to claim 7, wherein the display (38) is at least temporarily built into a machine in which the web guide and control device (20) is integrated, the display being built-in in a specified position relative to the web guide and control device (20), and wherein the position of the detection range (30) as determined on the basis of the measuring marks (54, 58) is used for adjusting the sensor system (28).

9. The method according to any of the proceeding claims, wherein, on the display (38), markings (58; 60) are shown which have a regular raster, and wherein the optical sensor system (28) comprises a camera, and the camera is calibrated on the basis of the markings (58; 60).

10. The method according to any of the proceeding claims, wherein the display (38) is at least temporarily built into a machine into which the web guide and control device (20) is integrated, and wherein a back side of the material web (14) that is facing away from the optical sensor system (28) is illuminated with the light from the display (38).

11. The method according to claim 1, wherein the optical sensor system (28') comprises a camera that is directed onto a peripheral area of a rotating cylinder (66) representing a cylinder over which the material web is running in a production mode, and wherein the display (38") is a flexible display that, in a test mode, is arranged on the peripheral surface of the cylinder (66).

12. The method according to claim 11, wherein the rotation of the cylinder (66) is measured and a relation between the measured rotation of the cylinder and the image information captured with the camera is examined.

13. The method according to claim 11 or 12, wherein a sequence of images that are printed on the material web and are different from one another is simulated on the display (38").

14. A web guide and control device for being built into a machine having a web transport system for a running material web (14), the web guide and control device (20) having an optical sensor system (28) for capturing an optical signal of at least a part of the running material web (14), an actuator system (32) for effecting a mechanical action on the material web (14), and a data processing system (36) for processing the optical signal and for generating adjusting commands for the actuator system (32), **characterized in that** the web guide and control system further comprises a display (38) that is configured for being built into the machine in a position in the detection range (30) of the optical sensor system (28).

## Revendications

1. Procédé de contrôle d'une unité fonctionnelle comportant un système de capteur optique (28) pour détecter un signal optique provenant d'au moins une partie d'une bande de matière continue (14), et un système de traitement de données (36) pour analyser le signal optique, **caractérisé en ce qu'**un affichage (38 ; 38' ; 38'') est agencé dans la zone de détection (30) du système de capteur (28), affichage sur lequel est représenté un état de la bande de matière (14).

2. Procédé selon la revendication 1 destiné à contrôler un fonctionnement d'un dispositif de régulation de bande de matière (20) comportant un système d'actionneur (32) pour agir mécaniquement sur la bande de matière (14) et un système de traitement de données (36) pour analyser le signal optique et pour générer des commandes de réglage du système d'actionneur (32).

3. Procédé selon la revendication 2, dans lequel des bords gauche et droit (L, R) d'une bande de matière (14') simulant la bande de matière réelle (14) sont représentés sur l'affichage (38 ; 38').

4. Procédé selon la revendication 3, dans lequel une bande de matière continue (14') est simulée sur l'affichage (38 ; 38'), la position de cette bande dans la direction (x) transversale à la direction de déplacement étant changée en fonction des commandes de réglage générés par le système de traitement de données (36).

5. Procédé selon l'une des revendications précédentes, dans lequel le système de capteur optique (28) comporte une caméra et une information d'image basée sur l'image capturée par la caméra, est superposée à l'image représentée sur l'affichage (38 ; 38').

6. Procédé selon l'une des revendications précédentes, dans lequel différentes propriétés de couleur et de transparence de la bande de matière (14') sont simulées sur l'affichage (38 ; 38').

7. Procédé selon l'une des revendications précédentes, dans lequel la zone de détection (30) du système de capteur optique (28) s'étend uniquement sur une partie de la surface de l'affichage (38 ; 38') et le mouvement de la bande de matière est simulé par des marques de mesure (54, 58) qui défilent sur l'image représentée sur l'affichage et dans lequel l'instant où cette marque de mesure est détectée par le système de capteur (28) est enregistré pour chaque marque de mesure (54, 58), afin de déterminer la position de la zone de détection (30) sur l'affichage (38 ; 38').

8. Procédé selon la revendication 7, dans lequel l'affichage (38) est inséré au moins temporairement dans une position définie par rapport au dispositif de régulation de bande de matière (20) dans une machine, dans laquelle le dispositif de régulation de bande de matière (20) est intégré, et dans lequel la position déterminée de la zone de détection (30)au moyen des marques de mesure (54, 58) est utilisée pour régler le système de capteur (28).

9. Procédé selon l'une des revendications précédentes, dans lequel des marques (58 ; 60) sont représentées sur l'affichage (38), lesquelles marques présentent un motif régulier, et dans lequel le système de capteur optique (28) comporte une caméra et cette caméra est étalonnée au moyen des marques (58 ; 60).

10. Procédé selon l'une des revendications précédentes, dans lequel l'affichage (38) est inséré au moins temporairement dans une machine, dans laquelle le dispositif de régulation de bande de matière (20) est intégré, et dans lequel un côté arrière de la bande de matière (14) opposé au système de capteur optique (28) est éclairé avec la lumière de l'affichage (38).

11. Procédé selon la revendication 1, dans lequel le système de capteur optique (28') comporte une caméra qui est dirigée vers une zone périphérique d'un cylindre rotatif (66), qui représente un cylindre au-dessus duquel la bande de matière passe dans un mode de production, et dans lequel l'affichage (38'') est un affichage souple qui est disposé sur la surface périphérique du cylindre (66) dans un mode de contrôle.

12. Procédé selon la revendication 11, dans lequel la rotation du cylindre (66) est mesurée et une relation entre la rotation mesurée du cylindre et l'information d'image capturée par la caméra est contrôlée.

13. Procédé selon la revendication 11 ou 12, dans lequel une séquence d'images différentes les unes des autres et imprimées sur la bande de matière, est simulée sur l'affichage (38").

14. Dispositif de régulation de bande de matière destiné à être intégré dans une machine comportant un système de transport de bande pour une bande de matière continue (14), dans lequel le dispositif de régulation de bande de matière (20) comporte un système de capteur optique (28) pour détecter un signal optique provenant d'au moins une partie de la bande de matière continue (14), un système d'actionneur (32) pour agir mécaniquement sur la bande de matière (14) et un système de traitement de données (36) pour analyser le signal optique et pour générer des commandes de réglage pour le système d'actionneur (32), **caractérisé en ce que** le système de régulation de bande de matière comporte en outre un affichage (38) qui est conçu pour être intégré dans la machine dans une position dans la zone de détection (30) du système de capteur optique (28).
